(19) Europäisches Patentamt
European Patent Office
Office européen des brevets

(11) Publication number: **0 035 347**
**B1**

(12) **EUROPEAN PATENT SPECIFICATION**

(45) Date of publication of patent specification: **01.02.84**

(51) Int. Cl.³: **C 10 M 1/36**, C 08 F 8/32

(21) Application number: **81300707.7**

(22) Date of filing: **19.02.81**

(54) **Hydrocarbon-substituted succinic acid or anhydride-polyamine lubricating oil additive with asymmetrical molecular weight distribution.**

(30) Priority: **21.02.80 US 123320**

(43) Date of publication of application:
**09.09.81 Bulletin 81/36**

(45) Publication of the grant of the patent:
**01.02.84 Bulletin 84/5**

(84) Designated Contracting States:
**DE FR GB IT**

(56) References cited:
**FR - A - 2 378 049**
**US - A - 3 172 892**

(73) Proprietor: **Exxon Research and Engineering Company**
**P.O.Box 390 180 Park Avenue**
**Florham Park New Jersey 07932 (US)**

(72) Inventor: **Brownawell, Darrell William**
**320 Roberts Lane**
**Scotch Plains New Jersey (US)**
Inventor: **Gutierrez, Antonio**
**22 Tar Heels Road**
**Mercerville New Jersey (US)**

(74) Representative: **Bawden, Peter Charles**
**Esso Chemical Research Centre PO Box 1**
**Abingdon**
**Oxfordshire OX13 6BB (GB)**

**EP 0 035 347 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Hydrocarbon-substituted succinic acid or anhydride-polyamine lubricating oil additive with asymmetrical molecular weight distribution

This invention relates to an improved lubricating oil additive having both dispersant and varnish potency. More particularly, this invention relates to an improved hydrocarbon-substituted succinic acid or anhydride-polyamine reaction product, wherein the hydrocarbon substituent has a relatively narrowly defined carbon atom range.

Additives comprising the reaction product of polyamines with a hydrocarbon-substituted succinic acid or anhydride compound, particularly a polyisobutenyl-substituted succinic acid or anhydride derivative, are well known in the art and are disclosed in U.S. 3,172,892, issued March 9, 1965, to LeSuer et al. Other representative disclosures are U.S. Patent 3,272,746, issued September 13, 1966 to LeSuer et al, and U.S. Patent 4,105,571, issued August 8, 1978 to Shaub et al.

The prior art as represented by said U.S. Patent 3,172,892 has recognized the importance of the carbon atom range of hydrocarbon substituent in such hydrocarbon-substituted succinic acid or anhydride-polyamine reaction products which are usually polyisobutenyl succinimides, and has been further recognized that the substituent should have 50 or more carbon atoms, preferably a polyisobutenyl radical having 50 or more carbon atoms, to have desirable dispersant properties. In practice, such additives have been prepared from polyisobutenyl radicals which, although containing substantial proportions of $C_{50}$ and higher radicals have also contained appreciable quantities of relatively lower molecular weight radicals, on the order of about 26 percent by weight or more of $C_{40}$ and lower radicals and 20 percent of $C_{32}$ and lower radicals. The presence of these radicals is due to the fact that polymerization of isobutene necessarily results in polyisobutenyl radicals which vary widely in their carbon atom range and normally have a symmetrical molecular weight distribution. Such products typically have an average of $C_{54}$.

The prior art has not fully recognized that distinct advantages are obtainable by optimizing the carbon atom range of the hydrocarbon substituent group which is linked to the succinic acid or anhydride moiety, and which product is subsequently reacted with a polyamine to make the well-known dispersant additives, which have been widely used in commercially available lubricating oil compositions.

The present invention, which can be considered an improvement within the broad teachings of U.S. Patent 3,172,892, is based on the discovery that removal of a significant amount of hydrocarbon substituent groups below about $C_{40}$, particularly polyisobutenyl groups, or at least minimization of the quantity of such relatively lower hydrocarbon substituents results in a hydrocarbon-substituted succinic acid or anhydride polyamine reaction product lubricating oil additive which exhibits excellent dispersant potency as well as significant anti-varnish properties. The present invention is further based upon the discovery that unless positive steps are taken to remove radicals of about $C_{40}$ and below, particularly radicals in a $C_{25}$—$C_{35}$ range and below, that these hydrocarbon substituents will have a definite adverse effect on the overall performance of the engine oil lubricating composition and will even promote the formation of varnish deposits on engine components. While the prior art has recognized the ineffectiveness of these relatively lower molecular weight hydrocarbon substituents as dispersants, there has been no recognition of the severe negative impact on lubricant performance caused by the promotion of varnish and deposition which will occur when significant quantities are present in the lubricating oil blend.

The prior art does disclose relatively higher molecular weight alkenyl, specifically polyisobutenyl, succinimide dispersants but these are considered outside the scope of and distinct from the products of the present invention since such products have a relatively higher carbon atom range, typically a $C_{81.5}$ average. Such products are disclosed in U.S. Patent 4,173,540. This patent discloses hydrocarbyl substituents having a number average molecular weight ($M_n$) by VPO (Vapor Pressure Osmometry) of 1200 to 5800 optimally 1300 to 4800. While such products, particularly the polyisobutenyl succinimide embodiments have a number of advantages, their viscosities are generally too high for general formulating purposes. Analysis of a typical product of average molecular weight 1141 by Gel Permeation Chromatography will show 25 weight percent radicals greater than $C_{188}$ and 15 weight percent radicals below $C_{40}$ with a carbon atom average of $C_{81.5}$ as noted above.

In accordance with the present invention, there has been discovered a lubricating oil additive exhibiting improved varnish inhibition and sludge dispersant potency being the reaction product of an ethylene polyamine and an aliphatic hydrocarbon-substituted succinic acid or anhydride the hydrocarbon substituents having an asymmetrical molecular weight distribution as indicated by at least 75 weight percent of said radicals being $C_{50}$ or greater and not more than 20 weight percent of said radicals being $C_{40}$ and less, and said hydrocarbon radicals having an average of from $C_{60}$ to $C_{80}$. Embodiments where the radicals are polyisobutenyl radicals are the particularly preferred embodiment of this invention.

The hydrocarbon substituent is derived from those sources commonly employed by the prior art, that is, polyolefins, such as polyethylene, polypropylene, and polyisobutylene, the latter being preferred since it is the product commercially used and polyisobutylene is a readily available source of the succinic hydrocarbon substituent.

Particularly preferred for use in the present invention are polyisobutenyl radicals having an average of about 64 to 75, such as $C_{64}$—$C_{70}$ or $C_{70}$—$C_{74}$, carbon atoms and containing about 75 to 95 weight percent or more, ideally up to 100 percent of polyisobutenyl radicals having 50 or more carbon atoms, with the amount of radicals below about $C_{30}$ being not more than 10 weight percent based on the total weight of polyisobutenyl radicals in the polyisobutylene used to form the polyisobutenyl succinimide dispersants of the present invention. Preferred embodiments are illustrated by a $C_{64}$ average polyisobutenyl radical having less than 10 weight percent $C_{30}$ radicals and a $C_{74}$ average polyisobutenyl radical having about less than 8 percent $C_{30}$ radicals. Such products in which the presence of lower molecular weight polyisobutenyl radicals has been minimized can be prepared using known separation techniques. Such techniques generally comprise treatment of commercially available polyisobutylene by solvent extraction with isopropanol with associated separation and distillation methods. Such methods are known in the art and are not considered an embodiment of the present invention which resides in the recognition of the improved dispersant and anti-varnish properties based on proper selection of the carbon atom range. Polymerization under controlled conditions would also be a desired method of providing polyisobutylene, whose molecular weight distribution is controlled to provide an asymmetrical distribution in accordance with this invention.

The polyamines used in the present invention are those ethylene polyamines as represented by the formula:

$$H_2N(CH_2CHRNH)_xH$$

wherein x is about 1 to 10 and R is a lower $C_1$—$C_8$ alkyl or hydrogen. Illustrative polyamines are ethylenediamine, diethylene triamine, triethylene tetramine, tetramethylene pentamine, pentaethylene hexamine, and the like. Tetraethylene pentamine is a preferred polyamine.

The formation of the hydrocarbon-substituted succinic acid or anhydride derivative is also known in the art and typically first involves a chlorination reaction to prepare a chlorinated polyisobutene, which is then reacted with maleic acid or anhydride to form the hydrocarbon-substituted succinic acid or anhydride product. Thereafter, the polyamine is reacted with the hydrocarbon-substituted succinic acid/anhydride in a ratio of about 1:1 to about 10:1 moles of hydrocarbon-substituted succinic acid/anhydride to amine.

The improved additive of the present invention is used in hydrocarbon lubricating oils including mineral lubricating oils as well as synthetic oils and mixtures thereof. Synthetic oils include diester oils, complex ester oils, silicone oils, and the like. Other conventionally used additives may be added to the oil compositions containing the additive of the present invention and these include anti-oxidants, rust inhibitors, friction modifiers, detergents, dispersants, viscosity index improvers. A typical commercial formulation will contain a number of such other additives.

The additives of the present invention will be used in normal amounts such as about 0.1 to about 10 weight percent based upon the total weight of the lubricant composition, preferably about 0.5 to 5 weight percent. The optimum concentration is a function of the nature of the particular mineral oil base stock and the type of service conditions expected. Typical mineral oils used as a base stock are those having a viscosity as measured by ASTM—D445 of from about 2 to 40, preferably 5 to 20 centistokes ($mm^2/S$) at 99°C.

The present invention is illustrated by the following examples where dispersant additives were evaluated which had a variable molecular weight distribution of polyisobutenyl radicals. Each additive used was the reaction product of tetraethylene pentamine with polyisobutenyl succinic anhydride in a molar ratio of 1.4 moles of polyisobutenyl succinic anhydride per mole of amine. The polyisobutenyl succinic anhydride has been prepared from chlorinated polyisobutylene (1 chlorine atom per polymer molecule) and maleic anhydride. The products differed principally in the molecular weight and carbon atom range of the polyisobutenyl substituent. The products are described below as Additives A, B, and C. Additive A being a type of dispersant disclosed by the prior art and Additives B and C being used and treated for purposes of comparison, to illustrate the newly discovered adverse effect of high proportions of lower molecular weight radicals in the polyisobutenyl group.

The carbon atom values were obtained by Gel Permeation Chromatography (GPC).

*Additive A:*

Polyisobutenyl molecular weight (VPO) = 973; weight percent nitrogen = 2.12
Average carbon atoms = 69—70 (polyisobutenyl radical)
60 weight percent $C_{56}$ and above
68 weight percent $C_{46}$ and above
25 weight percent $C_{30}$ and below

*Additive B:*

Polyisobutenyl molecular weight (VPO) = 595;
weight percent nitrogen = 2.64
Average carbon atoms 42—43 (polyisobutenyl radical)
18 weight percent $C_{55}$ and above
26 weight percent $C_{48}$ and above
65 weight percent $C_{42}$ and below

*Additive C:*

Polyisobutenyl molecular weight (VPO) = 434;
weight percent nitrogen = 3.75
Average carbon atoms 29—33 (polyisobutenyl radical)
3 weight percent $C_{50}$ and above
4 weight percent $C_{44}$ and above
90 weight percent $C_{30}$ and below

Each of these additives were evaluated in an engine test after being blended into a conventional lubricating oil composition. The test used was the "MS sequence VC engine Test" which was carried out in a Ford 302 cubic inch engine as described in ASTM Special Publication 315—E. This engine test is currently accepted by industry as a valid evaluation of lubricant additive performance. The blends tested each contained 6.3 weight percent of Additives A, B, and C together with 5.65 percent of a conventional additive package and 13.0 weight percent of a viscosity modifier. In the MS—VC tests, at the end of each test, various parts of the engine are graded on a merit basis wherein ten represents a perfectly clean part and lesser numbers represent increasing degrees of deposit formation. The various ratings are totalled and averaged on the basis of ten as a completely clean rating.

The results of this test are set forth below, the three additives being compared with a blank run which contained only the conventional additive and viscosity modifier but no polyisobutenyl succinimide product.

The conventional additive package contained overbased magnesium sulfonate, overbased barium/calcium phenate carbonate, and $P_2S_5$-treated alpha-pinene. The viscosity modifier was an ethylene-propylene copolymer viscosity index improver. The base stock was a 25 percent/75 percent by weight blend of, respectively, a paraffin lubricating oil having a kinematic viscosity of 20 cS min ($20 \times 10^{-6} m^2 S^{-1}$) at 100°F (38°C) and a paraffin oil having a viscosity of 31 cS min ($31 \times 10^{-6} m^2 S^{-1}$) at 100°F (38°C).

TABLE I

MS—VC RESULTS

| | Blank | Additive A | Additive B | Additive C | Limit |
|---|---|---|---|---|---|
| Sludge | 5.8 | 8.8 | 8.4 | 6.5 | 8.7 min. |
| Piston Skirt Varnish | 5.2 | 8.3 | 7.0 | 5.3 | 7.9 min. |
| Average Varnish | 5.7 | 8.0 | 5.3 | 5.3 | 8.0 min. |
| Oil Ring Clogging | 7% | 0% | 14% | 96% | |

The significance of these data is seen if one compares the varnish rating and oil ring clogging data for Additives B and C with both the blank run and the blend of the present invention. It is clear that Additives B and C promoted varnish deposition and associated oil ring sticking tendencies.

Further evaluations were conducted with dispersants prepared from tetraethylene pentamine and polyisobutenyl succinic anhydride which contained an asymmetrical molecular weight distribution in accordance with the present invention. These were prepared from a polyisobutylene which had been treated in accordance with conventional techniques comprising isopropanol extraction and separation to remove the lower molecular weight species. These are identified herein as Additions D and E.

The polyisobutenyl moiety of Additive D had a GPC average molecular weight of 896 and GPC analysis showed 74.95 weight percent of radicals greater than $C_{50}$, 81.54 weight percent of radicals greater than $C_{41}$ and 9.09 weight percent of radicals below $C_{30}$; the C average was $C_{64}$.

The polyisobutenyl moiety of Additive E had 79.48 weight percent of radicals greater than $C_{53}$, 85.27 weight percent of radicals greater than $C_{44}$ and 7.17 weight percent of radicals below $C_{31}$. The C average was $C_{74}$ and the GPC molecular weight average was 1039.

Both Additives D and E had a distinct asymmetrical molecular weight distribution as indicated by the above analysis. The sludge and varnish potency were evaluated for these two additives in the SIB

(SLUDGE INHIBITION BENCH TEST) and VIB (VARNISH INHIBITION BENCH TEST) while conducting a comparative test with Additives A and C which had been evaluated above in Table I.

The SIB Test employs a used crankcase mineral lubricating oil composition having an original viscosity of about 325 SUS at 37.8°C., which has been used in a taxicab that was driven generally for short trips only, thereby causing a buildup of a high concentration of sludge precursors. The oil that was used contained only a refined base mineral oil, a viscosity index improver, a pour point depressant and zinc dialkyldithiophosphate anti-wear additive. The oil contained no sludge dispersants. The quantity of such used oil was obtained by draining and refilling the taxicab crankcase at 1,000—2,000 mile intervals.

The SIB Test is conducted in the following manner: The used crankcase oil is freed of sludge by centrifuging for one-half hour at about 39,000 gravities (gs). The resulting clear bright red oil is then decanted from the insoluble sludge particles thereby separated out. However, the supernatant oil still contains oil-soluble sludge precursors which under the conditions employed by this test will tend to form additional oil-insoluble deposits of sludge. The sludge inhibiting properties of the additives being tested are determined by adding to portions of the used oil a small amount of the particular additive being tested. Ten grams of each one being tested is placed in a stainless steel centrifuge tube and is heated at 137.8 degrees C for 16 hours in the presence of air. Following the heating, the tube containing the oil being tested is cooled and then centrifuged for 30 minutes at about 39,000 gs. Any deposits of new sludge that forms in this step are separated from the oil by decanting supernatent oil and then carefully washing the sludge deposits with 15 ml. of pentane to remove all remaining oils from the sludge. The weight of the new solid sludge that formed in the test, in milligrams, is determined by drying the residue and weighing it. The results are reported as milligrams of sludge per ten grams of oil, thus measuring differences as small as one part per ten thousand. The less new sludge formed, the more effective is the additive as a dispersant. In other words, if the additive is effective, it will hold at least a portion of the new sludge that forms on heating and oxidation stably suspended in the oil so that it does not precipitate down during the centrifuging period.

In the VIB Test, a test sample consisting of ten grams of lubricating oil containing the additive being evaluated is used. The test oil is a commercial lubricating oil obtained from a taxi after two thousand miles of driving with said lubricating oil. Each sample is heat soaked overnight at about 140°C and thereafter centrifuged to remove the sludge. The supernatant fluid of each sample is subjected to heat cycling from about 150°C to room temperature over a period of 3.5 hours at a frequency of about two cycles per minute. During the heating phase, a gas containing a mixture of 0.7 volume percent $SO_2$, 1.4 volume percent NO and the balance air was bubbled through the test samples and during the cooling phase, water vapor was bubbled through the test samples. At the end of the test period, which testing cycle can be repeated at necessary to determine the inhibiting effect of any additive, the wall surfaces of the test flasks in which the samples were contained are visually evaluated as to the varnish inhibition. The amount of varnish imposed on the walls is rated at values of from one to seven with the higher number being the greater amount of varnish. It has been found that this test collaborates with the varnish results obtained as a consequence of carrying out MS—VC engine tests.

The results of the SIB and VIB test are set forth in the table below:

TABLE II

| Additive | Wt.% in oil | % Nitrogen in oil | Relative % Nitrogen | SIB Rating | VIB Rating |
|---|---|---|---|---|---|
| A | 0.5 | 0.0105 | 1.0 | 3.09 | 6.00 |
| D | 0.5 | 0.00835 | 0.8 | 2.63 | 4.25 |
| D | 0.42 | 0.00701 | 0.67 | 4.23 | 6.75 |
| E | 0.5 | 0.00835 | 0.8 | 3.35 | 5.00 |
| E | 0.36 | 0.00601 | 0.57 | 4.95 | 6.75 |

The point of these data is that both Additives D and E of the invention exhibit significant sludge and varnish potency at relatively low levels of nitrogen. Additive D is superior at equal dispersant concentration to Additive A in both SIB and VIB ratings. Additive E is superior at equal concentration of dispersant to Additive A in varnish performance. Evaluation of Additives D and E coupled with the data presented in Table I demonstrate clearly the performance obtained with the additives of the present invention, which are characterized as having an asymmetrical molecular weight distribution.

Additional SIB and VIB tests were conducted on Additives D and E of the present invention to verify the results and in this test, comparison was made with Additive A which represents a typical

commercial polyisobutenyl succinimide prepared from the anhydride and tetraethylene pentamine. The data are reported in Table III below:

TABLE III

| Additive | % N in Additive | % Additive in oil | % Nitrogen in oil | SIB rating | VIB rating |
|---|---|---|---|---|---|
| D | 1.64 | 0.5 | 0.0082 | 4.20 | 4 |
| D | 1.64 | 0.42 | 0.0069 | 5.40 | 6.5 |
| E | 1.64 | 0.5 | 0.0082 | 4.60 | 4.5 |
| E | 1.64 | 0.36 | 0.0059 | 5.43 | 6.5 |
| A | 2.12 | 0.5 | 0.0106 | 5.00 | 6 |

These data confirm the superior performance of the Additives D and E of the present invention at equivalent or somewhat reduced nitrogen levels which usually is viewed as a measure of the activity of a dispersant.

## Claims

1. A lubricating oil additive exhibiting improved varnish inhibition and sludge dispersant potency, said additive being the reaction product of an ethylene polyamine and an aliphatic hydrocarbon-substituted succinic acid or anhydride, the hydrocarbon substituents having an asymmetrical molecular weight distribution as indicated by at least 75 weight percent of said hydrocarbon radicals being $C_{50}$ or greater, not more than 20 weight percent of said hydrocarbon radicals being $C_{40}$ and less, and said hydrocarbon radicals having an average of from $C_{60}$ to $C_{80}$.

2. The additive of claim 1 wherein the hydrocarbon radicals are polyisobutenyl radicals.

3. The additive of claims 1 or 2 wherein said hydrocarbon radicals have an average of $C_{64}$ to $C_{75}$.

4. The additive of claims 1—3 wherein the polyamine is tetraethylene pentamine.

5. The additive of claims 1—4 wherein the hydrocarbon radicals have an average of about $C_{64}$ and contain less than 10 weight percent $C_{30}$ radicals.

6. The additive of claims 1—4 wherein the hydrocarbon radicals have an average of about $C_{74}$ and contain less than 8 weight percent of $C_{30}$ radicals.

7. A lubricating oil composition containing a mineral lubricating oil base stock and 0.5 to 10 weight percent of the additive of claims 1—6.

## Revendications

1. Additif pour huile lubrifiante exerçant un grand pouvoir d'inhibition du vernis et de dispersion de la boue, ledit additif étant le produit de réaction d'une éthylènepolyamine et d'un acide ou anhydride d'acide succinique à substituant hydrocarboné aliphatique, les substituants hydrocarbonés ayant une distribution asymétrique de poids moléculaire comme indiqué par le fait qu'au moins 75% en poids desdits radicaux hydrocarbonés sont en $C_{50}$ ou plus, pas plus de 20% en poids desdits radicaux hydrocarbonés sont en $C_{40}$ et moins et les radicaux hydrocarbonés ont une moyenne de $C_{60}$ à $C_{80}$.

2. Additif suivant la revendication 1, dans lequel les radicaux hydrocarbonés sont des radicaux polyisobutényle.

3. Additif suivant les revendications 1 et 2, dans lesquels les radicaux hydrocarbonés ont une moyenne de $C_{64}$ à $C_{75}$.

4. Additif suivant les revendications 1—3, dans lequel la polyamine est la tétraethylènepentamine.

5. Additif suivant les revendications 1—4, dans lequel les radicaux hydrocarbonés ont une moyenne d'environ $C_{64}$ et contiennent moins de 10% en poids de radicaux en $C_{30}$.

6. Additif suivant les revendications 1—4, dans lequel les radicaux hydrocarbonés ont une moyenne d'environ $C_{74}$ et contiennent moins de 8% en poids de radicaux en $C_{30}$.

7. Composition d'huile lubrifiante contenant une huile lubrifiante minérale de base et 0,5 à 10% en poids de l'additif suivant les revendications 1—6.

## Patentansprüche

1. Schmieröladditiv mit verbesserter Überzugsinhibierung und verbessertem Schlammdispergiervermögen, dadurch gekennzeichnet, daß das Additiv das Reaktionsprodukt von einem Ethylenpolyamin und einer (einem) mit einem aliphatischen Kohlenwasserstoff substituierten Bernsteinsäure oder

Bernsteinsäureanhydrid ist, wobei die Kohlenwasserstoffsubstituenten eine asymmetrische Molekulargewichtsverteilung aufweisen, was sich daraus ergibt, daß mindestens 75 Gew.% der Kohlenwasserstoffreste $C_{50}$ oder größer sind, nicht mehr als 20 Gew.% der Kohlenwasserstoffreste $C_{40}$ und weniger sind und die Kohlenwasserstoffreste einen Durchschnitt von $C_{60}$ bis $C_{80}$ aufweisen.

2. Additiv nach Anspruch 1, dadurch gekennzeichnet, daß die Kohlenwasserstoffreste Polyisobutenylreste sind.

3. Additiv nach Anspruch 1 oder 2, dadurch gekennzeichnet, daß die Kohlenwasserstoffreste einen Durchschnitt von $C_{64}$ bis $C_{75}$ aufweisen.

4. Additiv nach den Ansprüchen 1 bis 3, dadurch gekennzeichnet, daß das Polyamin Tetraethylenpentamin ist.

5. Additiv nach den Ansprüchen 1 bis 4, dadurch gekennzeichnet, daß die Kohlenwasserstoffreste einen Durchschnitt von etwa $C_{64}$ aufweisen und weniger als 10 Gew.% $C_{30}$-Reste enthalten.

6. Additiv nach den Ansprüchen 1 bis 4, dadurch gekennzeichnet, daß die Kohlenwasserstoffreste einen Durchschnitt von etwa $C_{74}$ aufweisen und weniger als 8 Gew.% $C_{30}$-Reste enthalten.

7. Schmierölzusammensetzung, die ein Basismineralschmieröl und 0,5 bis 10 Gew.% des Additivs gemäß den Ansprüchen 1 bis 6 enthält.